# EUROPEAN PATENT APPLICATION

(11) **EP 4 174 676 A1**
(43) Date of publication of application: **03.05.2023**
(21) Application number: 21831776.6
(22) Date of filing: 25.06.2021
(51) Int. Cl.: G06F 16/22

(54) **DATA REDISTRIBUTION METHOD AND APPARATUS**

(30) Priority: 28.06.2020 CN 202010600815
(71) Applicant: ZTE Corporation, Shenzhen, Guangdong 518057 (CN)
(72) Inventor: YAN, Jun, Shenzhen, Guangdong 518057 (CN)
(74) Representative: Osterhoff, Utz
(86) International application number: PCT/CN2021/102448
(87) International publication number: WO 2022/001883

(57) **Abstract**

Disclosed are a data redistribution method and an apparatus, the method includes: creating a rule table corresponding to a data redistribution request according to an original table in response to the data redistribution request sent from a computing node (301); generating rule table data and sending the rule table data to a storage node (303) corresponding to the rule table data; importing the rule table data into the rule table; complementing the rule table data according to the original table; and accessing data according to the rule table.

## Description

### CROSS-REFERENCE TO RELATED APPLICATIONS

This application claims priority to Chinese Patent Application No. 202010600815.9, filed on June 28, 2020, the entire contents of which are incorporated herein by reference.

### TECHNICAL FIELD

Embodiments of the present application relate to the field of databases, and specifically relate to a data redistribution method and apparatus.

### BACKGROUND

There are two main methods in the data redistribution industry:
1. The table to be redistributed is locked, such that it can not perform read and write operations until all the data redistribution in the table is completed. Depending on the volume of the data and resource constraints, the data redistribution can take hours or even days, which may result in serious impacts on the services by preventing operations on the tables being redistributed for a long time.
2. A more common method is to create a new table, export the full amount of data stored in the old table, then import all the data into the new table according to the new rules, then append incremental data, and then lock the old table, and switch to use the new table. This processing method is inefficient, higher network pressure, higher requirement for storage space, and the process of chasing increments presents a different time span according to the amount of services, and there may even be a problem of not being able to catch up all the time.

During the operation of the database system, the above two existing redistribution methods are used, the requirements for the existing network environment are higher, and the requirements for the emergency handling ability of the operation and maintenance operators are higher.

Distributed database redistribution scenarios include, in addition to expansion of volume, such as a reduction of volume, a modification of distribution methods, a modification of distribution fields, etc., which are often faced by database operations and maintenance operators, and also owned by mature database products.

### SUMMARY

Embodiments of the present application provide a data redistribution method, including: creating a rule table corresponding to a data redistribution request according to an original table in response to the data redistribution request sent from a computing node; generating rule table data and sending the rule table data to a storage node corresponding to the rule table data; importing the rule table data into the rule table; complementing the rule table data according to the original table; and accessing data according to the rule table.

Embodiments of the present application further provide a data redistribution apparatus, including: a processor, for creating a rule table corresponding to a data redistribution request according to an original table in response to the data redistribution request sent from a computing node; a storage node, for generating rule table data and sending the rule table data to a storage node corresponding to the rule table data; importing the rule table data into the rule table; complementing the rule table data according to the original table; and a computing node, for accessing data according to the rule table.

Embodiments of the present application further provide a data redistribution system, including the data redistribution apparatus as described above.

Embodiments of the present application further provide a device, including: one or more processors; and a memory for storing one or more programs; when the one or more programs are executed by the one or more processors, the one or more processors implement the data redistribution method as described above.

Embodiments of the present application further provide a storage medium storing a computer program, the computer program when executed by the processor implements the data redistribution method as described above.

### BRIEF DESCRIPTION OF THE DRAWINGS

FIG. 1 is a flowchart of a data redistribution method according to a first embodiment of the present application.
FIG. 2 is a flowchart of the data redistribution method according to a second embodiment of the present application.
FIG. 3 is a schematic diagram of a program module of a data redistribution apparatus according to a third embodiment of the present application.
FIG. 4 is a schematic diagram of the program module of the data redistribution apparatus according to a fourth embodiment of the present application.
FIG. 5 is a schematic structural diagram of a device according to an embodiment of the present application.

### DETAILED DESCRIPTION OF THE EMBODIMENTS

In order to make the purpose, technical solutions and advantages of the present application more clearly understood, the following embodiments of the present application are described in further detail by means of specific embodiments in conjunction with the accompanying drawings. It should be understood that the specific embodiments described herein are intended only to explain the present application and are not intended to limit it.

The current database has high concurrency, fast data growth, and service availability of all-day long. With the expansion of service, the expansion of data may be an order of magnitude increment, so the distributed database with good horizontal expansion capability is widely used. Distributed database generally adopts the architecture of share nothing, i.e., each node has independent storage, and the storage is not shared among nodes. Data is distributed to multiple nodes according to rules, and nodes are generally connected to each other through networks such as optical fiber.

Distributed database has good scalability and can flexibly distribute node data according to service scenarios. For example, as the volume of data grows by orders of magnitude, there are further requirements for data storage space and queries, and the original distributed database needs to be expanded, new data nodes are added to the distributed database, and the data migration is performed.

The data redistribution method and apparatus provided in the present application solve the problems of low efficiency and high overhead of data redistribution in some cases.

### First embodiment

In order to solve the problem of inefficiency caused by the creation of new tables in the prior art, the embodiment aims to create a rule table according to the new slice rules after receiving a data redistribution request, and the rule table stores the slice key and metadata information, the metadata information is the node information corresponding to the slice key data, for example, there are 3 nodes represented by 1, 2 and 3. The distributed database computing nodes access according to the old table before the end of the redistribution task, and the computing nodes access the data according to the rule table after the end of the redistribution task.

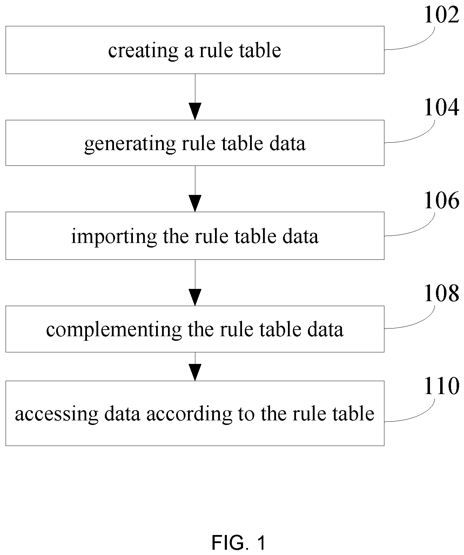

Referring to FIG. 1, the data redistribution method in the embodiment includes:
operation 102: creating a rule table corresponding to a data redistribution request according to an original table in response to the data redistribution request sent from a computing node.
operation 104: generating rule table data and sending the rule table data to a storage node corresponding to the rule table data.
operation 106: importing the rule table data into the rule table.
operation 108: complementing the rule table data according to the original table.
operation 110: accessing data according to the rule table.

The data redistribution method according to the first embodiment of the present application improves the efficiency of data redistribution and reduces the impact caused by data migration during redistribution by creating a rule table instead of migrating data by creating a new table.

### Second embodiment.

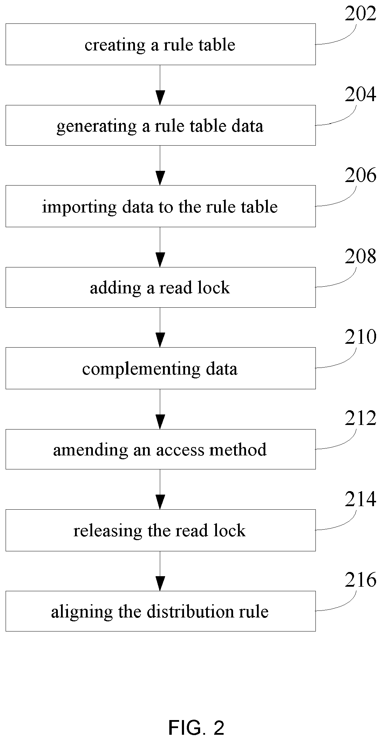

Referring to FIG. 2, the data redistribution method in the embodiment may include:
operation 202: creating a rule table.

After initiating a data redistribution request, a new rule table is created according to the original table, and the new rule table has the same slice key as the original table of the redistribution request, for example, the original table requires 3 nodes for hash according to field col 1, and the redistribution requires 4 nodes for hash, then the rule table requires 4 nodes for hash according to field col 1.

The embodiment takes the distribution mode that is changed from 3 nodes to 4 nodes as an example. The original table is named tbs_info detail with distribution mode hash(uuid)(g1,g2,g3), and the processor creates a hidden rule table tbs_info detail_res rule with distribution mode hash(uuid)(g1,g2,g3,g4). There are two fields in the rule table, uuid and groupid. The attributes of uuid field are exactly the same as the attributes of the original table, while the attributes of groupid field can use attributes of unsginedtinyint (only one byte), and the rule needs to create index for uuid (if the original table's uuid is primary key then a primary key for uuid is created).

Operation 204: generating a rule table data.

Each storage node contains a redistribution control module for generating and importing metadata rule table data. These redistribution control modules export distribution key values from each storage node in parallel, and carries the storage node number information. The split files are split into files of different storage nodes according to the new distribution rules and transferred to the corresponding storage nodes.

In this operation, all INSERT/UPDATE/DELETE statements that involve the slice key and are executed successfully are recorded, the slice key value and the corresponding group id are recorded.

Operation 206: importing data to the rule table.

The redistribution control module of each storage node can import the transferred data into the rule table.

Operation 208: adding a read lock.

The computing node is informed to add the read lock to the tables that need to be redistributed.

Operation 210: complementing data.

The slice key values recorded in the INSERT/UPDATE/DELETE statements are compared with the slice key values in the original table and the rule table, if the rule table lacks the data corresponding to the slice key values, the data corresponding to the slice key values in the original table is inserted to the rule table, if data corresponding to the slice key values in the rule table are redundant, the data corresponding to the slice key values is deleted from the rule table, and if the data in the rule table is inconsistent with the data in the original table, the data in the rule table is amended to be consistent with the data in the original table.

Operation 212: amending an access method.

The computing node is informed to amend the access method of the table, the computing node's own compute distribution algorithm is amended to access according to the rule table, and at the same time the INSERT/UPDATE/DELETE statement involving the table amends the rule table, and the new data is inserted to the new data node first.

Operation 214: releasing the read lock.

The added read lock is released.

Up till now, the redistribution task is complete.

Operation 216: aligning the distribution rule.

For the problem of inconsistency between the rule table distribution mode and the computed nodes, it can be executed at idle time by running a batch, for example:
1. First querying the rows with metadata field 2 of the rule table from node 1, and migrating this part of data to node 2 in batches, and changing the rule table.
2. Locking the table when most of the data is successfully migrated, and migrating the remaining data.
3. Informing the computing node to change the access of the table.
4. Clearing the rule table.

The data redistribution method provided by second embodiment of the present application creates a rule table which only contains two fields, to improve the redistribution efficiency and reduce the impact caused by data migration, and reduce the overhead of the redistribution.

### Third embodiment

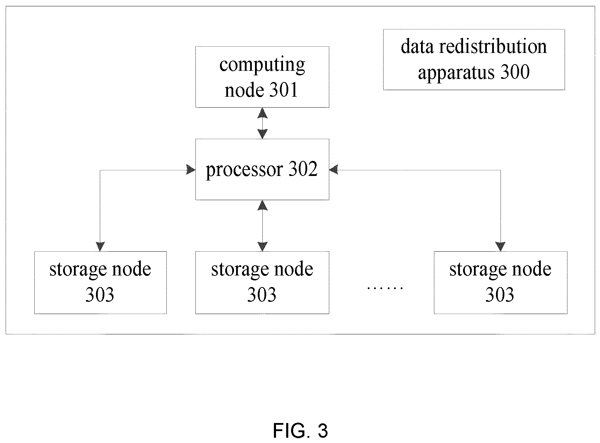

Referring to FIG. 3, the data redistribution apparatus 300 in the embodiment includes: a computing node 301, a processor 302, and a storage node 303.

The processor 302 is used to create a rule table corresponding to a data redistribution request according to the original table in response to the data redistribution request sent from the computing node 301. The storage node 303 has a plurality of nodes for generating rule table data and sending the rule table data to a storage node 303 that corresponds to the rule table data, and importing the rule table data into the rule table, and complementing the rule table data according to the original table. The computing node 301 is used to access data according to the rule table.

The data redistribution apparatus provided by the third embodiment of the present application improves the efficiency of data redistribution and reduces the impact caused by data migration by creating a rule table instead of migrating data by creating a new table.

### Fourth embodiment

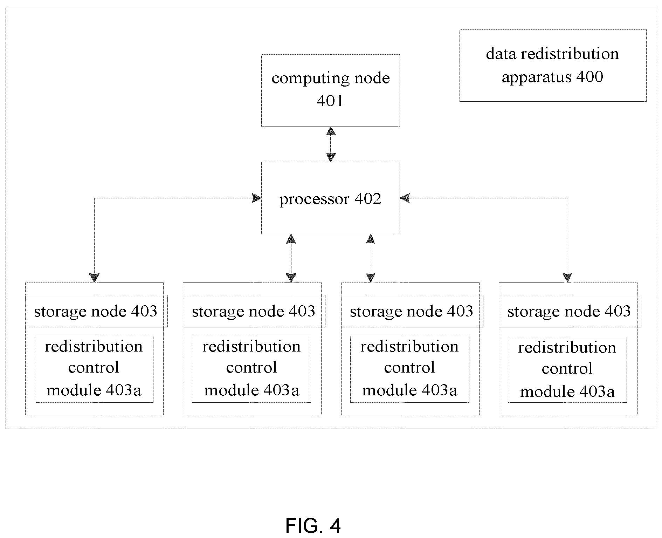

Referring to FIG. 4, the data redistribution apparatus 400 in the embodiment includes: a computing node 401, a processor 402, and a storage node 403. There are four storage nodes 403.

After the computing node 401 initiates a data redistribution request, the processor 402 creates a new rule table according to the original table, and the new rule table has the same slice key as the original table of the redistribution request.

Each of the four storage nodes 403 contains a redistribution control module 403a for generating and importing metadata rule table data. These redistribution control modules 403a export the distribution key values from each storage node 403 in parallel, and carry the storage node number information, and the split files are split into files of different storage nodes 403 according to the new distribution rules and transferred to the corresponding storage nodes 403. The computing node 401 records all INSERT/UPDATE/DELETE statements that involve the slice key and are executed successfully, the slice key value and the corresponding groupid.

The redistribution control module 403a of the storage node 403 imports the transferred data into the rule table.

The processor 402 informs the computing node 401 to add read lock to the tables that need to be redistributed.

The redistribution control module 403a compares the slice key values recorded in the INSERT/UPDATE/DELETE statements, that involve the slice keys recorded by the computing node 401, with the slice keys of the original table and the rule table, if the rule table lacks the data corresponding to the slice key values, the data corresponding to the slice key values in the original table is inserted to the rule table, if data corresponding to the slice key values in the rule table are redundant, the data corresponding to the slice key values is deleted from the rule table, and if the data in the rule table is inconsistent with the data in the original table, the data in the rule table is amended to be consistent with the data in the original table.

The processor 402 informs the computation node 401 to amend the access method of the table, and amends the computation node 401's own computation distribution algorithm to access according to the rule table, and the INSERT/UPDATE/DELETE statements involving the table need to amend the rule table at the same time, and the new data is inserted to the new data node first.

The computing node 401 releases the added read lock. Up till now, the redistribution task is completed.

If the rules need to be distributed, the operation 216 of the second embodiment can be referred.

The data redistribution apparatus provided in the fourth embodiment of the present application creates a rule table which only contains two fields, to improve the redistribution efficiency and reduce the impact caused by data migration, and reduce the overhead of the redistribution.

The present application also provides a data redistribution system, which includes the data redistribution apparatus of the fourth embodiment, which performs the data redistribution task with high efficiency.

As can be seen, it should be understood by those skilled in the art that all or some of the operations, systems, and functional modules/units in the methods disclosed above can be implemented as a software (which can be implemented with computer program code executable by the computing device), a firmware, a hardware, and appropriate combinations thereof. In the hardware implementation, the division between functional modules/units mentioned in the above description does not necessarily correspond to the division of physical components; for example, a physical component may have multiple functions, or a function or operation may be performed cooperatively by several physical components. Some or all of the physical components may be implemented as software executed by a processor, such as a central processing unit, a digital signal processor, or a microprocessor, or a hardware, or an integrated circuit, such as a specialized integrated circuit.

The present application also provides a device, and FIG. 5 is a schematic structural diagram of a device provided by the embodiment of the present application, as shown in FIG. 5, the device includes a processor 51, a memory 52, an input device 53, an output device 54, and a communication device 55. There are at least one processor 51 in the device. In FIG. 5, one processor 51 is taken as an example. The processor 51, the memory 52, the input device 53 and the output device 54 in the device can be connected via a bus or other means, and the connection via a bus is used as an example in FIG. 5.

The memory 52 is a computer-readable storage medium that can be used to store software programs, computer-executable programs, and modules, such as program instructions/modules corresponding to the data redistribution method in the embodiment of the present application. The processor 51 runs the software programs, instructions, and modules stored in the memory 52, to perform various functional applications and data processing of the device, i.e., to implement any of the methods provided in the embodiment of the present application.

The memory 52 may primarily include a memory program area and a memory data area, wherein the memory program area may store the operating system, at least one application required for the function, and the memory data area may store data created based on the use of the device, etc. In addition, the memory 52 may include a high-speed random access memory, and a non-volatile memory, such as at least one disk storage device, a flash memory device, or other non-volatile solid state memory device. In some examples, the memory 52 may further include a memory that is remotely set up for the processor 51, and such remote memory may be connected to the device via a network. Examples of such networks include, but are not limited to, the internet, corporate intranets, local area networks, mobile communication networks, and combinations thereof.

The input devices 53 may be used to receive input number or character information and to generate key signal inputs related to user settings and function control of the device. The output device 54 may include a display device such as a display screen.

The communication device 55 may include a receiver and a transmitter. The communication device 55 is provided to send and receive message communication according to the control of the processor 51.

In one embodiment, the present application also provides a storage medium containing computer-executable instructions, and the computer-executable instructions are used to perform a data redistribution method when executed by a computer processor, including: obtaining a stored procedure of a source database; parsing and translating the stored procedure to obtain a corresponding syntax block list; processing the syntax block list to obtain a stored procedure that satisfies the requirements of the target database.

Of course, the computer-executable instructions of a storage medium containing computer-executable instructions provided by the embodiment of the present application are not limited to the method as above, but can also perform the relevant operations in the data redistribution method provided by any embodiment of the present application.

From the above description of the embodiments, it will be clear to those skilled in the art that the present application can be implemented with the aid of software and the necessary general purpose hardware, or a hardware, but in many cases the former is the better implementation. Based on this understanding, the technical solution of the present application, which essentially or rather contributes to the prior art, can be embodied in the form of a software product, the software product can be stored in a computer readable storage medium, such as a computer floppy disk, a read-only memory (ROM), a random access memory (RAM), a flash memory (FLASH), a hard disk, or a CD-ROM, and includes a number of instructions to enable a computer device (which may be a personal computer, a server, or a network device, etc.) to perform the data redistribution method of each embodiment of the present application.

The foregoing is a further detailed description of the embodiments of the present application in combination with specific implementations, and it cannot be assumed that the specific implementations of the present application are limited to these descriptions. Several simple derivations or substitutions can be made by those skilled in the art without departing from the concept of the present application, and should be considered as falling within the scope of the present application.

## Claims

1. A data redistribution method, **characterized by** comprising:
creating a rule table corresponding to a data redistribution request according to an original table in response to the data redistribution request sent from a computing node;
generating rule table data and sending the rule table data to a storage node corresponding to the rule table data;
importing the rule table data into the rule table;
complementing the rule table data according to the original table; and
accessing data according to the rule table.

2. The data redistribution method according to claim 1, wherein the rule table comprises a slice key and metadata information.

3. The data redistribution method according to claim 1 or claim 2, wherein the generating rule table data comprises:
exporting a distribution key value and node number information, and splitting the distribution key value and the node number information into files corresponding to the storage node, according to a distribution rule contained in the data redistribution request; and
recording the slice key and a distribution mode, and an INSERT/UPDATE/DELETE statement successfully executed on a corresponding slice key.

4. The data redistribution method according to claim 3, wherein the complementing the rule table data according to the original table comprises:
comparing slice keys of the rule table and the original table with a slice key recorded in the INSERT/UPDATE/DELETE statement;
inserting data corresponding to the slice key in the original table into the rule table in response that the rule table lacks the data corresponding to the slice key;
deleting data corresponding to the slice key from the rule table in response that the data corresponding to the slice key are redundant; and
amending data corresponding to the slice key in the rule table, which is inconsistent with corresponding data in the original table, to the data corresponding to the slice key in the original table.

5. The data redistribution method according to any one of claims 1 to 4, wherein before the complementing the rule table data according to the original table, the method further comprises:
adding a read lock to a table that requires data redistribution;
wherein after the accessing data according to the rule table, the method further comprises:
releasing the read lock.

6. A data redistribution apparatus, **characterized by** comprising:
a processor, for creating a rule table corresponding to a data redistribution request according to an original table in response to the data redistribution request sent from a computing node;
a storage node, for generating rule table data and sending the rule table data to a storage node corresponding to the rule table data; importing the rule table data into the rule table; complementing the rule table data according to the original table; and
a computing node, for accessing data according to the rule table.

7. The data redistribution apparatus according to claim 6, wherein the rule table comprises a slice key and metadata information.

8. The data redistribution apparatus according to claim 6 or claim 7, wherein the storage node is further for exporting a distribution key value and node number information, and splitting the distribution key value and the node number information into files corresponding to the storage node, according to a distribution rule contained in the data redistribution request;
the computing node is further for recording the slice key and a distribution mode, and an INSERT/UPDATE/DELETE statement successfully executed on a corresponding slice key.

9. The data redistribution apparatus according to claim 8, wherein the storage node is further for comparing slice keys of the rule table and the original table with a slice key recorded in the INSERT/UPDATE/DELETE statement;
inserting data corresponding to the slice key in the original table into the rule table in response that the rule table lacks the data corresponding to the slice key;
deleting data corresponding to the slice key from the rule table in response that the data corresponding to the slice key are redundant; and
amending data corresponding to the slice key in the rule table, which is inconsistent with corresponding data in the original table, to the data corresponding to the slice key in the original table.

10. The data redistribution apparatus according to any one of claims 6 to 9, wherein the computing node is further for adding a read lock to a table that requires data redistribution before the storage node complements data, and releasing the read lock after data is accessed according to the rule table.

11. A data redistribution system, **characterized by** comprising: the data redistribution apparatus according to any one of claims 6 to 10.

12. A device, **characterized by** comprising:
one or more processors; and
a memory for storing one or more programs;
wherein when the one or more programs are executed by the one or more processors, the one or more processors implement the method according to any one of claims 1 to 5.

13. A storage medium, **characterized in that** the storage medium stores a computer program, the computer program when executed by the processor implements the method according to any one of claims 1 to 5.
